# EUROPEAN PATENT APPLICATION

(11) **EP 1 923 556 A1**
(43) Date of publication of application: **21.05.2008**
(21) Application number: 06255814.3
(22) Date of filing: 14.11.2006
(51) Int. Cl.: F02D 35/02, F02D 19/10, F02D 41/40

(54) **Improvements to engine control system**

(71) Applicant: Delphi Technologies, Inc., Troy, Michigan 48007 (US)
(72) Inventor: Orlando Volpato Filho, Piracicaba, SP 13416-130 (BR)
(74) Representative: Gregory, John David Charles

(57) **Abstract**

A method of detecting a combustion event in a combustion chamber of an engine system, the engine system comprising a fuel injector in fluid communication with a source of fuel and the combustion chamber and a knock sensor for detecting knock events within the combustion chamber, the method comprising: detecting a combustion event from a signal output from the knock sensor.

## Description

### Technical Field

The present invention relates to improvements to engine control systems and, more particularly, relates to a method and apparatus for detecting combustion events within an engine and a method and apparatus for controlling the injection of fuel into the combustion chambers of the engine.

### Background to the Invention

In a conventional rotary fuel pump, the angular position of a cam ring is adjusted by means of a servo advance arrangement. One known type of servo advance arrangement is described in our European patent application EP 1356196. The servo advance arrangement includes a main piston (referred to as the advance piston) which cooperates with a cam arrangement of the fuel pump to adjust the timing of fuel pump delivery. The advance piston is responsive to fuel pressure changes within an advance piston control chamber (the main advance control chamber). If pressure in the main advance control chamber increases, the advance piston is caused to move in a first direction so as to advance the timing of fuel delivery. If pressure in the main advance control chamber is reduced, the advance piston is caused to move in an opposite direction to retard the timing of fuel delivery.

A servo piston is operable in response to a transfer pressure signal (a signal dependent upon engine speed) to determine the position of the main advance piston. For certain positions of the servo piston, the main advance control chamber receives fuel at transfer pressure by means of a supply port provided in the advance piston and a flat machined on the outer surface of the advance piston. In such circumstances increased fuel pressure within the main advance control chamber causes the advance piston to move to advance engine timing. For other positions of the servo piston, a drain port is uncovered causing pressure within the main advance control chamber to decrease and, hence, the advance piston is moved to retard engine timing. The supply port and the drain port arc aligned on a common axis on the advance piston so that both communicate with the flat, either to provide a flow route into the main advance control chamber through the supply port or a flow route out of the main advance control chamber through the drain port. The servo advance arrangement is also provided with a light load mechanism to permit the timing of fuel delivery by the pump to be varied when the engine operates under light load conditions.

As noted above, the pump will inject at an advance angle that is determined by the piston position which in turn is dependent on the engine speed. However, in order to keep hydrocarbon emissions from the engine as low as possible the advance angle of the fuel injection may be controlled as a function of other engine operating conditions.

For example, the optimum amount of fuel may vary depending on the engine combustion chamber design, the fuel temperature, the fuel quality, the air temperature, the air/fuel ratio, residual exhaust in the chamber etc.

A control system controlled, for example, by the engine's engine control unit (ECU), may control a control valve in the advance arrangement to advance and retard the timing of fuel delivery as required. In order to control fuel delivery, it is desired to determine the actual start of combustion so that fuel injection timing may be adjusted in the event that the actual start of combustion is not approximately equal to the estimated start of combustion (as determined by the above engine operating parameters).

Prior art systems use dedicated sensor systems to provide the required feedback relating to the start of combustion. This is undesirable as it increases the amount of hardware within the engine system. It is also noted that some ECUs do not have capability for handling extra sensor input and so it would be difficult to retrofit such engines such that they are capable of controlling the advance arrangement in dependence upon the start of combustion.

It is noted that the type of engine control described above is of particular relevance to engine systems in which a pilot injection is made into the combustion chambers of the engine in order to ignite the main fuel load.

An example of such an engine system is a diesel-compressed natural gas (diesel-CNG) engine in which a diesel pilot injection is used to ignite an air-natural gas mixture. In order to obtain the lowest NOₓ emissions, the least amount of pilot fuel that will ignite the combustible natural gas mixture is needed. The control system in a diesel-CNG engine therefore requires data relating to the actual start of combustion of the pilot injection in order to ensure the performance of the engine is optimal.

Similar problems to those illustrated above also apply to engine systems that comprise electronically controlled fuel injectors. In such engine systems, although the injectors are directly controlled by the engine's ECU, data relating to the combustion of the fuel mixture within the engine is still required by the ECU to properly control the engine.

It is an object of the present invention therefore to remove or alleviate at least one of the aforementioned problems.

### Statements of Invention

According to a first aspect of the present invention, there is provided a method of detecting a combustion event in a combustion chamber of an engine system, the engine system comprising a fuel injector in fluid communication with a source of fuel and the combustion chamber and a knock sensor for detecting knock events within the combustion chamber, the method comprising: detecting a combustion event from a signal output from the knock sensor.

Following an injection of fuel into a combustion chamber of an engine, the fuel mixture will be ignited, e.g. by a spark plug. This combustion event is followed, in normal operation, by the smooth burning of all the fuel within the engine's combustion chamber.

In some instance, however, the fuel does not burn smoothly and instead detonates (a "detonation event" as opposed to the desired "combustion event") in such a manner that all the unburned fuel within the chamber explodes before the combustion front can reach it. Such detonation events are known as engine knock. Knocking has a detrimental effect on the efficiency of an engine and can result in damage to engine components.

Engine knock may be controlled by a number of actions such as altering the air/fuel mixture within the engine or retarding the timing of the fuel injection.

In order to mitigate against engine knocking it is commonplace for engine systems to comprise one or more knock sensors mounted on the engine block for the detection of knocking cylinders. It is noted that smaller engines will generally comprise a single knock sensor. Larger engines and engines with cylinder arrangements that are not "in line" (for example V6 and V8 engines) may comprise two or more knock sensors. Such larger engines may be arranged with one knock sensor for each pair of cylinders.

The output signals from such sensors are fed into the ECU which can then adjust the engine parameters accordingly whenever knock events are detected.

Although knock events will not always occur, an engine's control unit will be able to roughly estimate where they will appear in the engine cycle in the event that they do take place. The output from engine knock sensors are therefore either only monitored or integrated over a specific range of engine crank angle.

The present invention recognises that pre-existing knock sensors may also be used to detect combustion events, as well as detonation events, within the combustion chamber.

Combustion occurs before any knock events that are likely to affect the engine and so using the, already existing, knock sensors in this "dual mode" of operation will not interfere with their primary purpose, to detect knock events.

Preferably, the combustion event that the knock sensor is used to detect is the start of combustion of the injected fuel mixture. Conveniently, the method of the present invention may be used to detect the start of combustion of an amount of pilot fuel injected into the combustion chamber by a pilot fuel injector.

Conveniently, the signal that is output from the knock sensor may be measured during a measurement window (said measurement window being separate from the normal knock measurement window) in order to detect combustion events within the combustion chamber. The knock sensor output signal may be integrated during this measurement window in order to derive the energy of the output signal.

Preferably, the method further comprises calculating when combustion is expected to occur and then, for each combustion cycle, measuring the output of the knock sensor during one of two measurement windows, the first of which may be located before the expected point of combustion and the second of which may be located after the expected point of combustion. It is noted that for successive combustion events the location of the measurement window will alternate between ''before combustion" and after combustion".

In a digital signal processing (DSP) based knock system or a knock system comprising two or more knock sensors, the two measurement windows may be placed before and after the expected point of combustion within the same engine cycle. Such a measurement regime would however require a bespoke ECU. if an off the-shelf ECU with conventional knock control circuitry is used then it is noted that, generally, such a system would be limited to a single measurement window per engine cycle and it would not be possible to overlap two measurement windows within a single engine cycle.

Therefore, in such instances the ECU would need to alternate the measurement window about the expected point of combustion as detailed above.

Conveniently, the magnitude of the energy of the output signal may be calculated for each measurement window and the magnitudes compared to determine the start of combustion within the combustion chamber.

According to a second aspect of the present invention, there is provided a method of controlling a fuel injector for injecting fuel into a combustion chamber of an engine system, the method comprising: detecting a combustion event in the combustion chamber by means of the method of the first aspect of the invention; comparing the timing of the detected combustion event with a desired timing for the combustion event; adjusting the timing of an injection event from the fuel injector such that a subsequent combustion event is at or closer to the desired timing for the combustion event.

In the second aspect of the present invention, the detection of a combustion event by the method of the first aspect of the present invention may be used to control a fuel injector that injects fuel into the combustion chamber in question. In the second aspect of the invention, a combustion event is detected using the method of the first aspect of the invention. The timing of such a combustion event is then compared with the desired or expected timing for the combustion event. In the event that the measured and expected points of combustion do not match, then the timing of the fuel injected may be adjusted accordingly.

In the case of an electronically controlled injector, a control signal sent directly to the injector from the ECU may be varied so as to adjust the timing of the fuel injection.

In the case of a mechanically controlled injector, a control signal may be sent to an advance arrangement that is capable of advancing or retarding the timing of the fuel injection.

According to a third aspect of the present invention, there is provided a method of controlling the operation of a knock sensor for detecting knock events in a combustion chamber of an engine system, the method comprising: detecting a combustion event in the engine according to the method of the first aspect of the present invention; measuring the signal output from the knock sensor in a knock measurement window, and setting the position of the knock measurement window within the engine cycle based on the location of the combustion event as detected in the detecting step.

As noted above, it is expected that knock events, if they occur, will happen at predictable points in the engine cycle. An ECU may therefore arrange to monitor the output of the knock sensor in a defined window, the "knock measurement window", at a defined point after the start of combustion. Conveniently, therefore, the position of this knock measurement window may be adjusted in the third aspect of the invention in the event that the start of combustion is not where it is expected. Conveniently, the knock measurement window is maintained at a certain position from the start of combustion.

According to a fourth aspect of the invention, there is provided a controller for controlling the operation of a fuel injector in an engine system, the engine system comprising at least one combustion chamber, the or each combustion chamber being associated with a knock sensor for detecting knock events within the chamber, the controller comprising: inputs for receiving data from the knock sensor relating to a combustion event; a processor programmed to determine fuel injection timings appropriate to said data; and outputs for outputting a fuel injector control signal as determined by the processor.

The fourth aspect of the invention provides a controller that operates in a manner that corresponds to the second aspect of the invention. Preferred features of the second and first aspects of the present invention therefore apply to the controller of the fourth aspect of the invention.

The invention extends to an engine control unit for a vehicle comprising a controller according to the fourth aspect of the invention, to a vehicle engine system having such a controller and to a diesel-compressed natural gas engine system having such a controller.

The invention may also be expressed as a data carrier comprising a computer program to implement the methods of the present invention.

### Description of the Drawings

The invention will further be described, by way of example, with reference to the accompanying drawings, in which:
Figure 1 is a block diagram generally illustrating a system in accordance with a first embodiment of the present invention;
Figure 2 is a sectional view of a part of an advance arrangement in accordance with a first embodiment of the present invention;
Figure 3 is a sectional view showing a part of the advance arrangement in Figure 2 in more detail;
Figure 4 is block diagram illustrating the relationship between the various components of the first embodiment of the present invention;
Figure 5 is a block diagram generally illustrating a system in accordance with a second embodiment of the present invention
Figure 6 is a diagram showing a measurement window used by the sensor according to the present invention to detect a combustion event in one cylinder;
Figure 7 is a diagram showing sensor output measurements according to the present invention for two different combustion events, and;
Figure 8 is a diagram showing the determination of pilot injection position in accordance with an embodiment of the present invention for a 4 cylinder engine.

### Detailed Description

The present invention provides a control system that can optimise engine performance to obtain minimum emissions. The control system of the present invention provides a means for determining the actual start of combustion within the engine such that the timing etc of fuel injections may be varied in order to optimise the engine's performance.

The control system according to the present invention may particularly be applied to diesel-compressed natural gas type engines.

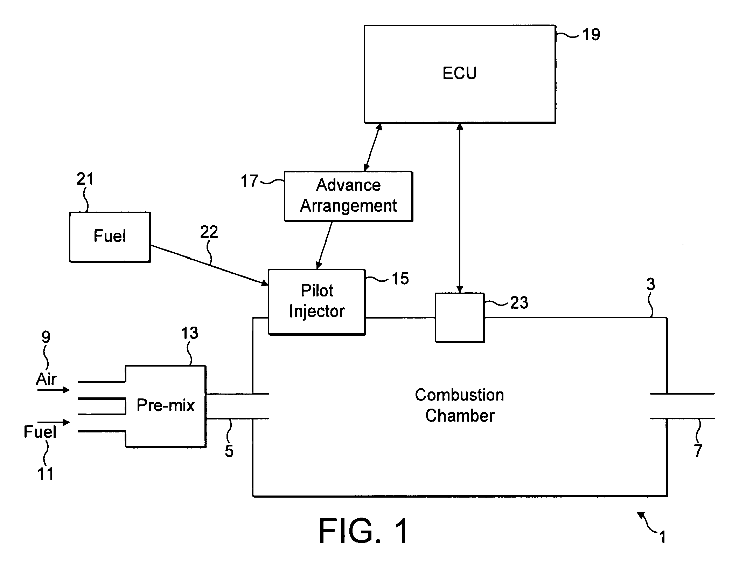

Turning to the drawings, a first embodiment of the invention is illustrated in Figure 1 as being implemented in a suitable diesel-CNG combustion engine environment. It is noted that throughout the drawings like numerals are used to denote like features.

Figure 1 shows an engine environment 1 comprising a plurality of combustion chambers (cylinders) 3. It is noted that for the sake of clarity only a single cylinder 3 is shown in Figure 1.

The chamber 3 has an inlet passage 5, through which an air/fuel mixture is supplied, and an outlet exhaust passage 7. Manifolds 9 and 11 supply air and fuel respectively to a premixing chamber 13 which is in turn connected to the inlet passage 5.

A pilot fuel injector 15 is provided to supply fuel to the combustion chamber 3. The injector 15 in this first embodiment is a mechanically operated pump which injects in dependence upon the speed of the engine.

The timing of the fuel injection is adjustable by means of a servo controlled advance arrangement 17 which is in communication with an Electronic control unit (ECU) 19. It is noted that there may be more than one pilot fuel injector per combustion space and that the ECU 19 may be the main vehicle/engine ECU or a dedicated control unit.

A fuel tank 21 containing diesel fuel or the like is in communication with the injector 15 via a supply line or common rail 22. Although diesel fuel is typically used with the pilot injector, other fuel types may be used for pilot injection.

The advance arrangement 17 may be used to advance or retard the pilot fuel injection so as to optimise engine performance. It is noted that the advance arrangement 17 is controlled by the ECU 19 and is in communication with the pilot fuel injector 15.

As described in greater detail below, the pilot injector 15 injects at an advance angle defined by a piston whose position is dependent only on the pressure of the pilot fuel. This is a function of engine speed.

In use, the injector 15 injects pilot fuel into the combustion chamber 3. The combustion chamber at this time comprises a primary gaseous fuel/air mixture (e.g. a natural gas/air mixture) and the pilot fuel is injected in order to ignite the gaseous primary fuel mixture. Ignition of the pilot fuel occurs upon injection and is achieved by compression.

In order to keep hydrocarbon emissions as low as possible it is the aim of the ECU 19 to control the advance angle of the pilot injection in dependence upon other engine operating conditions. A proportional control valve may therefore be mounted to the advance arrangement to control the advance angle of the pilot fuel injection but a feedback mechanism is required that provides the ECU 19 with data relating to the detection of combustion within the combustion chamber 3.

In conventional systems, a dedicated sensor (e.g. an ionisation signal from a spark plug or ionisation probe or a signal from a pressure sensor) may be used to provide the required feedback to the ECU 19. It is noted however that many conventional systems do not have the capacity for the ECU to receive such data. As a consequence the provision of a dedicated combustion detection sensor may require the replacement or upgrading of the existing control system. It is an object of the present invention, as described in more detail below, to provide a system that substantially overcomes this problem.

Engine knock, (also called pinking or pinging) is technically detonation of the fuel/air mixture within the combustion chamber. Engine knock occurs after the fuel/air mixture has been ignited by the spark plug (or in this case by compression of the fuel mixture) and the smooth burning of the mixture is interrupted by the unburned mixture in the combustion chamber exploding before the flame front can reach it. Combustion stops suddenly, because of the explosion, and the resulting shockwave reverberates in the combustion chamber and pressures increase catastrophically, creating a characteristic metallic "pinging" sound.

Engine knock may be controlled by a number of means. For example, the amount of fuel injected/inducted may be increased (resulting in a lower Air to Fuel Ratio) or the cylinder pressure may be reduced by increasing the engine revolutions. Engine knock may also be prevented by retarding the pilot fuel ignition.

Correct ignition timing is essential for optimum engine performance and fuel efficiency. Modern automotive and small-boat engines have sensors that can detect knock and retard (delay) ignition to prevent it.

A knock sensor consists of a small piezoelectric microphone, on the engine block, connected to the engine's ECU. Spectral analysis is used to detect the trademark frequency produced by detonation at various RPM. When detonation is detected the ignition timing is retarded, reducing the knocking and protecting the engine.

The engine system depicted in Figure 1 comprises a knock sensor 23 to detect when engine knock occurs and it is noted that there will be a knock sensor 23 associated with each combustion chamber within the engine.

The present invention recognises that the knock sensor 23 may, in addition to detecting knock events, be used to detect the start of combustion of the pilot fuel injected into the combustion chamber 3.

The ECU 19 may therefore receive measurement data from the knock sensor 23 throughout the engine cycle and from this the start of combustion can be determined. Once the timing of the combustion event is known the ECU 19 may adjust the advance arrangement 17 accordingly in order to optimise the operation of the engine.

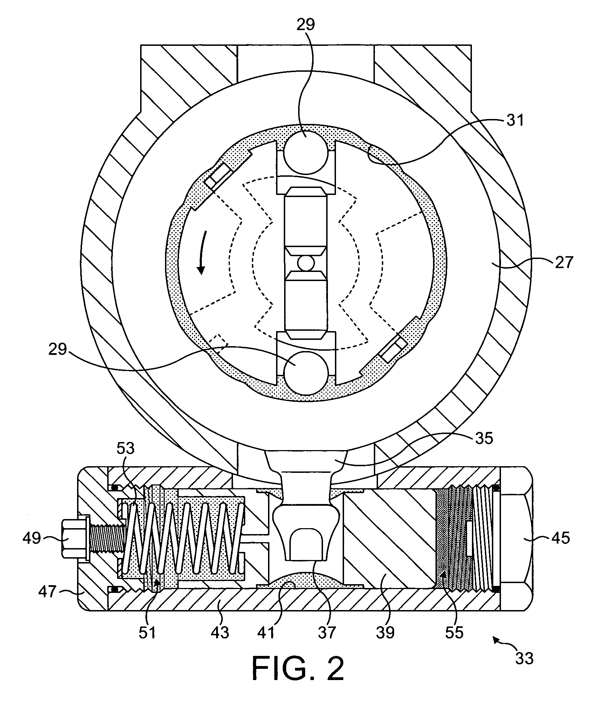

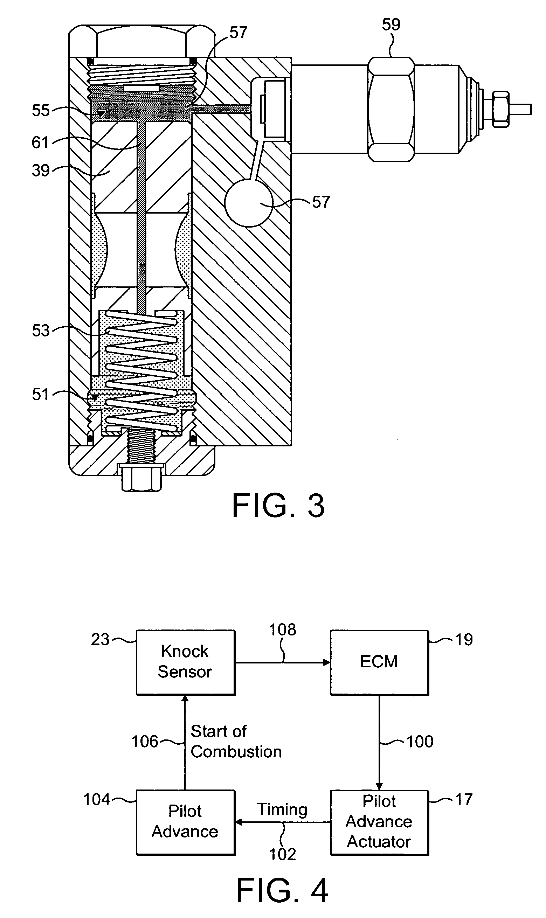

Turning now to Figures 2 and 3, a conventional rotary fuel pump includes a cam ring 27 which is angularly adjustable with respect to a pump housing.

The cam ring includes a plurality of cam lobes and encircles part of a distributor member, including pumping plungers which are slidable within respective bores of the distributor member. Each of the pumping plungers has an associated shoe and roller 29 arrangement, the rollers of which arc engagable with the cam surface 31 of the cam ring 27. In use, fuel is supplied to the bores of the distributor member by a transfer pump and a force due to fuel pressure within the bores serves to urge the plungers in a radially outward direction. The output pressure of the transfer pump (referred to as "transfer pressure") is controlled so as to be related to the speed of operation of the engine with which the pump is being used.

Rotation of the distributor member relative to the cam ring 27 causes the rollers 29 to move relative to the cam ring, engagement between the rollers and the cam lobes thereby causing the plungers to be forced in a radially inward direction to pressurise fuel within the respective bore and causing fuel to be delivered by the pump at relatively high pressure. By altering the angular position of the cam ring by means of an advance arrangement (indicated generally as 33), the timing at which fuel is delivered by the pump can be adjusted.

As will be described in further detail hereinafter, the advance arrangement includes a servo piston arrangement which is arranged to influence the degree of timing advance depending on the operating speed of the engine (referred to as "speed advance").

Figures 2 and 3 show an advance arrangement 33 in which the cam ring 27 is provided with a peg 35 which extends into an opening 37 provided in an advance piston 39 in order to permit adjustment of the angular position of the cam ring 27. The advance piston 39 is slidable within a bore 41 provided in an advance box housing 43. The ends of the bore 41 are closed by a piston plug 45 and spring cap 47 which are secured to the advance box housing 43 by means of bolts 49. Appropriate 0-rings may be used to seal the piston plug 45 and spring cap 47 to the advance box housing 16.

A control chamber 51 which houses a control spring 53 is provided on one side of the advance piston 39 to urge the piston in the retard direction. The fuel pressure within the control chamber 51 is relatively low compared to a further chamber 55 provided at the opposite end of the piston 39. The further chamber 55 is in communication with a source of pressurised fuel (not shown) via a drilling 57.

The flow of fuel into the further chamber 55 is controlled by a control solenoid 59 (which in turn is controlled by the ECU 19). When the pressure of fuel within the further chamber 55 rises sufficiently, the high pressure fuel overcomes the action of the spring 53 to push the advance piston 39 in the advance direction.

Movement of the advance piston 39 is transmitted via the peg 35 to the cam ring 27 and the timing of the pilot fuel injection from the injector 15 may therefore be controlled by the supply of high pressure fuel into the further chamber 55.

A small orifice 61 connects the control chamber 51 with the further chamber 55. It is noted that the flow of fuel into the further chamber 55 (which is controlled by the control solenoid 59) may only serve to move the piston 39 in the advance direction. The provision of the orifice 61 allows fuel to flow from the relatively high pressure further chamber 55 to the relatively low pressure control chamber 51 which therefore allows the spring 53 to overcome the fuel pressure exerted on the piston 39 from the further chamber 55 and consequently to move the piston in the retard direction.

As noted above, prior art systems utilise a dedicated sensor to detect when combustion of the pilot injection occurs within the combustion chamber 3 and consequently to control the advance position of the pilot advance actuator.

The present invention proposes that the knock sensor 23 which is already part of the engine control system and used to prevent engine knock may also be used to detect the start of combustion of the pilot injection.

As noted above, the knock sensor essentially comprises a small piezoelectric microphone, the output of which can be analysed to detect the trademark frequency produced by detonation at various RPM.

Figure 4 illustrates the relationship between the various components within the engine system according to the first embodiment of the present invention. As described above, the engine control unit 19 controls the operation of the pilot advance actuator 17 (via control signal 100). This in turn alters the timing 102 of the pilot fuel injection 104 and therefore the start of combustion within the combustion chamber 3.

The start of combusion may be detected by the knock sensor 23 in much that same way that the sensor 23 detects a knocking event, i.e. the output of the knock sensor can be analysed to detect a combustion event. It is noted that a knocking event would generally be expected to occur some time after the start of combustion 106 and so the use of the knock sensor 23 to detect the start of combustion 106 will not affect the normal operation of the knock sensor in any way. It is also noted that the start of combustion 106 and a knocking event will produce different types of output from the sensor 23 and so it will be possible to distinguish between the two types of event.

The output of the knock sensor (signal 108) may be fed back to the ECU 19 for signal processing to determine when combusion begins.

Knock detection is usually perfomed via the knock sensor 23 within a defined measurement window, hereinafter referred to as the "Knock measurement window". During combustion, the diesel fuel injected by the pilot injection will burn quickly and this causes the engine block to resonate (like a bell). In use therefore, the knock sensor output signal is processed by a band-pass filter having an individual gain value for each cylinder. This filtered signal is then rectified and integrated over a measurement window. The operating environment of an engine can be very noisy (intake/exhaust valve operation, etc) and the filtering, rectification and integration processing is performed in order to increase the sensitivity of the control system to knocking events.

It is noted that the methods of the present invention will process the output of the knock sensor in a similar manner in order to increase the sensitivity of the control system to the detection of combustion events within the engine.

The position of the knock measurement window is determined based on the expected start of combustion.

The present invention recognises the fact that the knock sensor may also be used to determine the actual start of combustion within the combustion chamber 3. If the actual start of combustion varies from the expected start of combustion (which is caluclated by the ECU 19 based on other engine parameters), then the pilot fuel injection timing may be adjusted by sending a signal 100 to the pilot advance actuator 17 to either advance or retard the pilot injection as appropriate.

Conveniently, the detection of the combustion event may be performed by employing two measurement windows which arc placed slightly before and slightly after the expected pilot combustion point

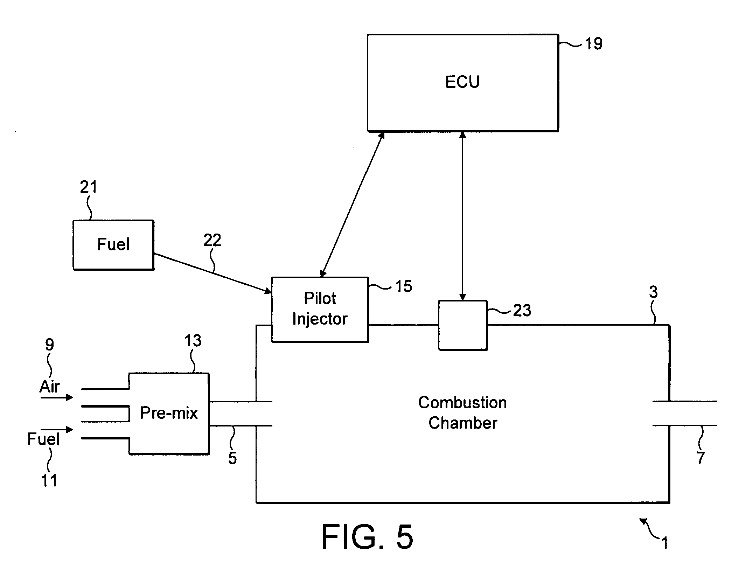

Figure 5 shows a block representation of a second embodiment according to the present invention. It is noted that like features between Figures 1 and 5 are denoted by lie numerals.

In the second embodiment the pilot fuel injector is not a mechanical injector pump but is instead a suitable electronically controlled fuel injector, such as an electro-hydraulic fuel injector.

In this embodiment, the engine environment does not comprise an advance arrangement 17. Instead the ECU 19 is in direct communication with the pilot injector 15 and the timing of pilot injections may be directly controlled by the ECU 19.

Therefore, in use, in the second embodiment, the control unit 19 controls the injection of pilot fuel from the injector 15 into the combustion chamber 3. For the above example of a diesel fuel-CNG engine, it is noted that the ECU 19 controls the injector 15 and also the amount of natural gas (primary fuel) injected. Once again, the aim of the ECU 19 is to minimise the amount of diesel fuel or the like in order to keep emissions as low as possible.

In order to optimise and control the operation of the engine the ECU 19 will receive numerous data signals regarding the operating parameters of the engine. For example, data relating to engine speed, fuel temperature, fuel temperature etc will be input into the ECU 19.

In accordance with the present invention, the knock sensor 23 may also be used by the ECU 19 to determine the start of a combustion event within the combustion chamber 3 of the engine.

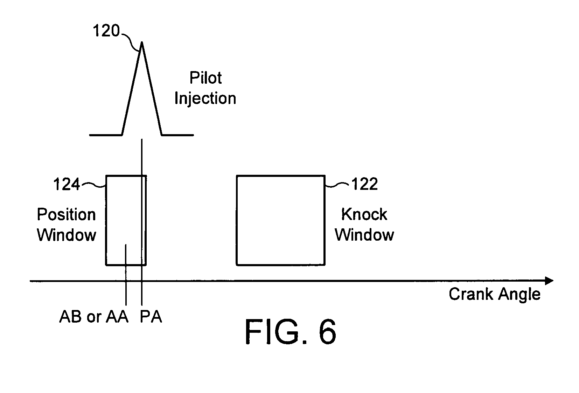

Figure 6 illustrates the normal operation of the knock sensor 23 and how the sensor's operation may be modified in accordance with embodiments of the present invention.

Figure 6 shows, with respect to engine crank angle, a combustion event 120 and a knock detection measurement window 122. In normal operation, the injector 15 will inject fuel into the combustion chamber, which fuel is then ignited. If the engine is operating correctly then there should be a smooth burning of the gas mixture within the combustion chamber 3.

Engine knock is essentially a detonation event (as opposed to the ignition of the fuel mixture which is termed a "combustion event"). If knocking occurs, it is expected some time after the start of combustion.

In its normal mode of operation, therefore, the output of the knock sensor 23 is monitored within a defined measurement window 122 which is located around the point in time that a knock event might be expected. In the Figure, this is illustrated by the measurement window 122 being at a greater crank angle than the combustion event 120.

The present invention recognises that the start of combustion may also be determined from the knock sensor output. A further measurement window 124 (labelled "Position Window") is therefore present in Figure 6.

In use, the ECU 19 locates the position window 124 at and around the crank angle that corresponds to the expected start of combustion. The output of the sensor 23 is again integrated and monitored by the ECU 19 in order to confirm when ignition begins.

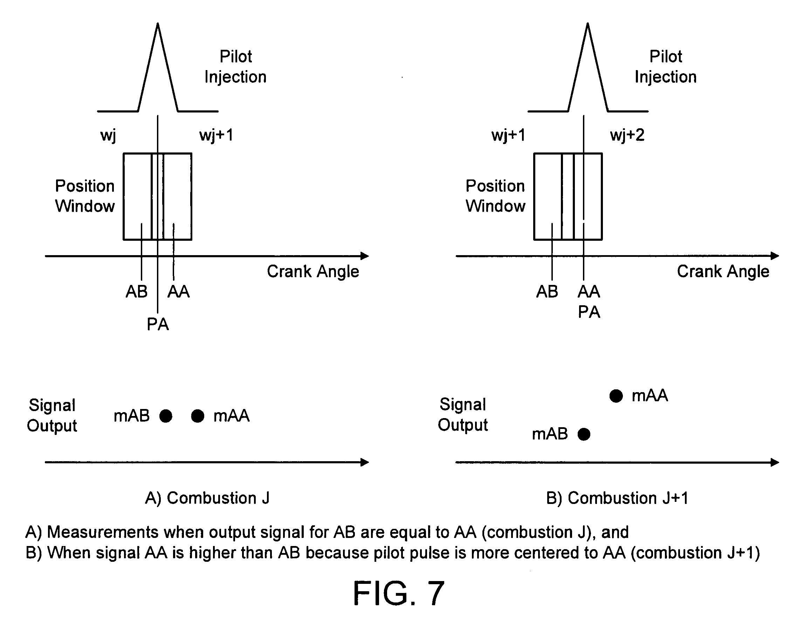

Conveniently, the detection of the start of combustion may be determined with reference to two position windows. This detection regime is shown in Figure 7.

If the expected point of combustion is termed the pilot injection angle (PA) then the measurement windows may be termed AA (the measurement window at the "angle after" the expected combustion point) and AB (the measurement window at the "angle before" the expected combustion angle).

The combustion of the pilot injection may be evaluated as a function of the signals measured by the knock sensor 23 at AA and AB, i.e. PA = *f*(AB) + f(AA).

If the pilot position is exactly where it is expected then the magnitude of the signals measured at AA and AB will be equal (see Combustion J in Figure 7a). If, however, the combustion event is early with respect to the expected combustion point then the signal at AB will be higher than AA. Alternatively, if the combustion event is late relative to the expected combustion point then the signal at AA will be higher than AB (see Combustion J+1 in Figure 7b).

It is noted that the signals measured by a knock sensor for different cylinders may be individually compensated using an individual gain value for each cylinder. This would take into account the fact that a given knock sensor will be at a different distance from each cylinder.

It is further noted that the ratio of signals at AA and AB can be used not only to assess if the actual start of combustion angle is advanced or retarded in respect with the desired value, but also to approximately evaluate an error angle that can be used to estimate the actual position of the start of combustion.

The absolute intensity of the signals at AA and AB may also be used to control the amount of injected diesel fuel, in order to keep it to a minimum.

In response to the measured start of combustion, the ECU 19 may adjust the expected start of combustion for the next engine cycle and move the positions of the two measurement windows AA and AB accordingly.

Furthermore, if the detected combustion point strays too far from the desired start of injection then the ECU 19 can instruct the advance arrangement 17 (in the first embodiment) or the injector 15 directly (in the second embodiment) to adjust the timing of injection from the injector 15.

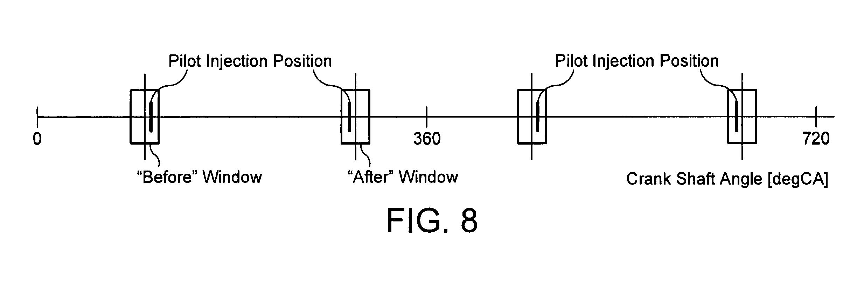

Figure 8 shows how the present invention may be applied to a four cylinder engine. In this case it can be seen that there are four detected combustion events. It is noted that there is a single measurement window for each combustion event and that these windows alternate between being positioned before and after the expected point of combustion for each successive combustion event.

It will be understood that the embodiments described above are given by way of example only and are not intended to limit the invention, the scope of which is defined in the appended claims. It will also be understood that the embodiments described may be used individually or in combination.

## Claims

1. A method of detecting a combustion event in a combustion chamber of an engine system, the engine system comprising:
a fuel injector in fluid communication with a source of fuel and the combustion chamber, and;
a knock sensor for detecting knock events within the combustion chamber,
the method comprising: detecting a combustion event from a signal output from the knock sensor.

2. A method as claimed in Claim 1, wherein the combustion event that is detected is the start of combustion of fuel injected into the combustion chamber by the fuel injector.

3. A method as claimed in Claim 1 or 2, wherein the fuel injector is a pilot fuel injector and the combustion event is the start of combustion of pilot fuel injected by the pilot injector.

4. A method as claimed in any preceding claim, wherein the signal output from the knock sensor is measured during a measurement window

5. A method as claimed in Claim 4, wherein the signal output from the knock sensor is integrated over the measurement window in order to derive the energy of the signal output during the measurement window.

6. A method as claimed in any preceding claim, the method further comprising calculating when the combustion event is expected to occur and wherein the signal output from the knock sensor is measured during one of two measurement windows, the first of which is located before the expected combustion event and the second of which is located after the expected combustion event.

7. A method as claimed in Claim 6, wherein the magnitude of the energy of the signal output is determined for each measurement window and the timing of the combustion event is determined by comparing the magnitudes of each signal.

8. A method of controlling a fuel injector for injecting fuel into a combustion chamber of an engine system, the method comprising: detecting a combustion event in the combustion chamber by means of the method of any of Claims 1 to 7; comparing the timing of the detected combustion event with a desired timing for the combustion event; adjusting the timing of an injection event from the fuel injector such that a subsequent combustion event is at or closer to the desired timing for the combustion event.

9. A method as claimed in Claim 8, wherein the fuel injector is an electronically controlled injector and the timing of the fuel injection from the fuel injector is adjusted by varying a control signal sent to the fuel injector.

10. A method as claimed in Claim 8, wherein the engine system comprises an advance arrangement for advancing and retarding the timing of the fuel injection from the fuel injector and the timing of the fuel injection is adjusted by varying a control signal sent to the advance arrangement.

11. A method of controlling the operation of a knock sensor for detecting knock events in a combustion chamber of an engine system, the method comprising:
detecting a combustion event in the engine according to the method of any of claims 1 to 7;
measuring the signal output from the knock sensor in a knock measurement window;
setting the position of the knock measurement window within the engine cycle based on the location of the combustion event as detected in the detecting step.

12. A method as claimed in Claim 11, wherein the position of the knock measurement window is set a predetermined period after the start of combustion within the combustion chamber.

13. A controller for controlling the operation of a fuel injector in an engine system, the engine system comprising at least one combustion chamber, the or each combustion chamber being associated with a knock sensor for detecting knock events within the chamber, the controller comprising:
inputs for receiving data from the knock sensor relating to a combustion event;
a processor programmed to determine fuel injection timings appropriate to said data; and
outputs for outputting a fuel injector control signal as determined by the processor

14. An engine control unit for a vehicle comprising a controller according to Claim 13.

15. A vehicle engine system comprising a controller according to Claim 13.

16. A diesel-compressed natural gas engine system comprising a controller according to Claim 13.

17. A carrier medium for carrying a computer readable code for controlling a controller or engine control unit to carry out the method of any of Claims 1 to 7; 8 to 10, or; 11 to 12.
